# EUROPÄISCHE PATENTANMELDUNG

(11) **EP 4 450 322 A1**
(43) Veröffentlichungstag der Anmeldung: **23.10.2024**
(21) Anmeldenummer: 24164734.6
(22) Anmeldetag: 20.03.2024
(51) Int. Cl.: B60L 58/12

(54) **VERFAHREN ZUR DYNAMISCHEN LADESTANDSÜBERWACHUNG FÜR EIN ELEKTRISCH BETRIEBENES ARBEITSFAHRZEUG**

(30) Priorität: 17.04.2023 DE 102023109529
(71) Anmelder: Deere & Company, Moline, IL 61265 (US)
(72) Erfinder: Reiter, Dominik, Mannheim (DE); Fritz, Norbert, Mannheim (DE)
(74) Vertreter: Dehnhardt, Florian Christopher

(57) **Zusammenfassung**

Verfahren zur dynamischen Ladestandsüberwachung für ein elektrisch betriebenes Arbeitsfahrzeug (10), das ein Antriebssystem mit einem an einer Ladestation (56) aufladbaren elektrischen Energiespeicher umfasst, bei dem von einer Kontrolleinheit der Verlauf einer zwischen einer Startposition (60) des Arbeitsfahrzeugs (10) am Ort der Ladestation (56) und einer davon abweichenden aktuellen Betriebsposition (62) des Arbeitsfahrzeugs (10) zurückgelegten Fahrtstrecke (58) einschließlich ihres Höhenprofils aufgezeichnet wird, ein entlang der zurückgelegten Fahrtstrecke (58) auftretender mittlerer Energieverbrauch des Arbeitsfahrzeugs (10) bestimmt wird, auf Grundlage der ermittelten Fahrtstrecke (58) sowie des bestimmten mittleren Energieverbrauchs ein zur Rückkehr aus der aktuellen Betriebsposition (62) zur Startposition (60) entlang der zurückgelegten Fahrtstrecke (58) oder einer daraus abgeleiteten Rückfahrtstrecke vorzuhaltender Gesamtenergiebedarf des Arbeitsfahrzeugs (10) abgeschätzt wird, und der abgeschätzte vorzuhaltende Gesamtenergiebedarf des Arbeitsfahrzeugs (10) als Energiereserveinformation über eine Nutzerschnittstelle ausgegeben wird.

## Beschreibung

Die Erfindung betrifft ein Verfahren zur dynamischen Ladestandsüberwachung für ein elektrisch betriebenes Arbeitsfahrzeug, das ein Antriebssystem mit einem an einer Ladestation aufladbaren elektrischen Energiespeicher umfasst.

Im Automobilbereich ist es üblich, den aktuellen Ladestand eines der Versorgung eines elektrischen Fahrantriebs dienenden Akkumulators nebst Angabe einer voraussichtlichen Restreichweite auf einem Fahrzeugdisplay zu visualisieren. Die Restreichweite wird hierbei nach Maßgabe eines zeitlich gemittelten Energieverbrauchs angepasst, sodass sich dem tatsächlichen Verbrauchsverhalten in gewissem Umfang Rechnung tragen lässt. Wird ein bestimmter fest vorgegebener Mindestladestand unterschritten, so erhält der Fahrer über das Fahrzeugdisplay eine entsprechende Information, um diesen zu veranlassen, eine nächstgelegene Ladestation aufzusuchen.

Im Unterschied zum Automobil-, aber auch konventionellen Nutzfahrzeugbereich, der in erster Linie auf die Durchführung von Straßenfahrten mit einem vergleichsweise gut ausgebauten Netzwerk an Ladestationen gerichtet ist, besteht bei landwirtschaftlichen Arbeitsfahrzeugen meist keine Möglichkeit "unterwegs" nachzuladen. Vielmehr ist hierzu die Rückkehr zum Hof, genauer gesagt zu einer dort fest installierten Ladestation erforderlich, die beispielsweise aus einer Photovoltaikanlage mit elektrischer Energie gespeist wird. Handelt es sich bei dem Arbeitsfahrzeug um einen landwirtschaftlichen Traktor, so unterliegt der tatsächliche Energieverbrauch zudem einer Vielzahl weiterer (äußerer) Einflüsse, die dem Umstand geschuldet sind, dass dieser der universellen Durchführung unterschiedlichster Arbeitsaufgaben einschließlich dem Betrieb zugehöriger Anbau- oder Zusatzgeräte dient, mithin eine (Straßen-) Transportfahrt nur eine von vielen Betriebssituationen darstellt. Die zutreffende Einschätzung des Ladestands zum Zwecke der rechtzeitigen Rückkehr zur Ladestation setzt daher neben einer sorgfältigen Arbeitsplanung entsprechende Erfahrung seitens des Fahrers voraus.

Angesichts dessen ist es Aufgabe der vorliegenden Erfindung, ein Verfahren zur dynamischen Ladestandsüberwachung für ein elektrisch betriebenes Arbeitsfahrzeug dahingehend anzugeben, dass dieses den Gegebenheiten landwirtschaftlicher Anwendungen im Sinne einer vereinfachten Einschätzung des korrekten Ladestands seitens eines Fahrers Rechnung trägt.

Diese Aufgabe wird durch ein Verfahren mit den Merkmalen des Patentanspruchs 1 gelöst.

Das Verfahren zur dynamischen Ladestandsüberwachung für ein elektrisch betriebenes Arbeitsfahrzeug, das ein Antriebssystem mit einem an einer Ladestation aufladbaren elektrischen Energiespeicher umfasst, sieht vor, dass von einer Kontrolleinheit
- der Verlauf einer zwischen einer Startposition des Arbeitsfahrzeugs am Ort der Ladestation und einer davon abweichenden aktuellen Betriebsposition des Arbeitsfahrzeugs zurückgelegten Fahrtstrecke einschließlich ihres Höhenprofils aufgezeichnet wird,
- ein entlang der zurückgelegten Fahrtstrecke auftretender mittlerer Energieverbrauch des Arbeitsfahrzeugs bestimmt wird,
- auf Grundlage des ermittelten Verlaufs der Fahrtstrecke sowie des bestimmten mittleren Energieverbrauchs ein zur Rückkehr aus der aktuellen Betriebsposition zur Startposition entlang der zurückgelegten Fahrtstrecke oder einer daraus abgeleiteten Rückfahrtstrecke vorzuhaltender Gesamtenergiebedarf des Arbeitsfahrzeugs abgeschätzt wird, und
- der abgeschätzte vorzuhaltende Gesamtenergiebedarf des Arbeitsfahrzeugs als Energiereserveinformation über eine Nutzerschnittstelle ausgegeben wird.

Das erfindungsgemäße Verfahren macht sich den für den Landwirtschaftsbereich typischen Umstand zunutze, dass ein elektrisch betriebenes Arbeitsfahrzeug bzw. ein von diesem umfasster elektrischer Energiespeicher hier in aller Regel stationär auf einem Hof geladen wird, um von dort eigenständig in Richtung eines auf einer Wirtschaftsfläche (Acker, Wiese, Wald, etc.) auszuführenden Arbeitsvorgangs loszufahren. Dies trifft vor allem dann zu, wenn das Arbeitsfahrzeug als landwirtschaftlicher Traktor ausgebildet ist. Nach erfolgreichem Verrichten des betreffenden Arbeitsvorgangs kehrt der landwirtschaftliche Traktor dann üblicherweise auf demselben Weg zum Hof und damit zur dort befindlichen Ladestation zurück.

Andererseits ist es jedoch auch möglich, dass der landwirtschaftliche Traktor mehrere Wirtschaftsflächen hintereinander aufsucht und erst danach auf einem vom Hinweg abweichenden Rückweg zum Hof zurückfährt. Der aufgezeichnete Verlauf der zurückgelegten Fahrtstrecke kann in einem solchen Fall als Grundlage für eine wahrscheinlichkeitsbasierte Ableitung der Rückfahrtstrecke herangezogen werden, wozu insbesondere kartografische Informationen hinsichtlich eines umliegenden Straßen- und Wegenetzes von der Kontrolleinheit ausgewertet werden. Die betreffenden kartografischen Informationen werden beispielsweise mittels eines GPS-Navigationssystems in Verbindung mit einer topografischen Datenbank zur Verfügung gestellt. Hierbei wird kann der entlang der zurückgelegten Fahrtstrecke bestimmte mittlere Energieverbrauch zur Vorhersage eines für die Rückfahrtstrecke zu erwartenden mittleren Energieverbrauchs herangezogen werden. Letzterer dient dann der Abschätzung vorzuhaltenden Gesamtenergiebedarfs.

Es sei angemerkt, dass das erfindungsgemäße Verfahren nicht auf einen bestimmten Typ von Arbeitsfahrzeug beschränkt ist, auch kann es sich anstelle eines auf einer Wirtschaftsfläche auszuführenden Arbeitsvorgangs ebenso gut um eine Transportfahrt mit einem Anhänger handeln, die zwischen dem Hof und einer bestimmten Verladestelle ausgeführt wird.

Das von der Kontrolleinheit aufgezeichnete Höhenprofil erlaubt eine Bestimmung der entlang der zurückgelegten Fahrtstrecke auftretenden Steigungen bzw. Gefälle und dient insbesondere der Berechnung bzw. Bilanzierung der beim Zurückfahren zur Ladestation vom Arbeitsfahrzeug insofern aufzubringenden bzw. rekuperierbaren (potentiellen) Energie. Der Verlauf der Fahrtstrecke einschließlich des Höhenprofils wird zum Beispiel mittels eines mit der Kontrolleinheit in Verbindung stehenden GPS-Navigationssystems erfasst.

Zur Ausgabe der Energiereserveinformation wird diese bevorzugt visuell und/oder auditiv für den Fahrer wahrnehmbar gemacht, wozu die Nutzerschnittstelle ein Display und/oder eine Sprachausgabeeinheit aufweisen kann. Die Nutzerschnittstelle kann hierbei fest im Arbeitsfahrzeug eingebaut sein, es kann sich aber auch um ein Mobiltelefon oder dergleichen handeln, das über eine drahtlose Schnittstelle mit der Kontrolleinheit in Datenaustauschverbindung steht.

Die Berücksichtigung des Verlaufs der zurückgelegten Fahrtstrecke in Verbindung mit dem damit korrespondierenden mittleren Energieverbrauch des Arbeitsfahrzeugs erlaubt eine dynamische Anpassung der über die Nutzerschnittstelle ausgegebenen Energiereserveinformation dahingehend, dass eine effektive Nutzung des im elektrischen Energiespeicher zur Verfügung stehenden Energievorrats für die Zwecke der Durchführung eines jeweiligen Arbeitsvorgangs ebenso wie eine unterbrechungsfreie Rückkehr zur Ladestation gewährleistet ist. Dies ermöglicht es auch einem mit dem betreffenden Arbeitsfahrzeug bzw. Arbeitsvorgang weniger vertrauten Fahrer, den Ladestand des elektrischen Energiespeichers korrekt einzuschätzen und rechtzeitig zur Ladestation zurückzukehren.

Vorteilhafte Ausführungen des erfindungsgemäßen Verfahrens gehen aus den Unteransprüchen hervor.

Vorzugsweise wird die Energiereserveinformation von der Kontrolleinheit auf Grundlage eines Vergleichs des abgeschätzten vorzuhaltenden Gesamtenergiebedarfs mit einem aktuellen Energieverbrauch des Arbeitsfahrzeugs sowie dem aktuellen Ladestand des elektrischen Energiespeichers über die Nutzerschnittstelle als verbleibende Restarbeitszeit ausgegeben. Die Wiedergabe der Energiereserveinformation in Form einer Zeitangabe stellt hierbei eine für landwirtschaftliche Anwender vertraute und damit besonders einfach einzuschätzende Größe dar.

Des Weiteren ist es möglich, dass der entlang der zurückgelegten Fahrtstrecke auftretende mittlere Energieverbrauch von der Kontrolleinheit nach Maßgabe einer oder mehrerer für den Betrieb des Arbeitsfahrzeugs charakteristischer Parameter bestimmt wird. Die charakteristischen Parameter repräsentieren bevorzugt Faktoren, die auf den Energieverbrauch des betreffenden Arbeitsfahrzeugs (un-)mittelbar Einfluss haben.

Zunächst können die charakteristischen Parameter einen von der Kontrolleinheit ermittelten Fahrbahn- und/oder Untergrundtyp betreffen. Hierbei kann unter anderem eine Einteilung der zurückgelegten Fahrtstrecke in Kategorien wie "Straße", "Wirtschaftsweg" "zu bearbeitende Ackerfläche" erfolgen. Die betreffenden Zuordnungen lassen sich aus kartografisch verorteten Metadaten des mit der Kontrolleinheit kommunizierenden GPS-Navigationssystems gewinnen. Durch die so geschaffene Unterteilung erfolgt die rechnerische Mittelung bei der Bestimmung des mittleren Energieverbrauchs nicht über die gesamte Fahrtstrecke, sondern vielmehr abschnittsweise für sich hinsichtlich ihrer Fahreigenschaften und damit ihres Energiebedarfs unterscheidende Fahrtzustände. Die Genauigkeit bei der Vorhersage bzw. Abschätzung des vorzuhaltenden Gesamtenergiebedarfs des Arbeitsfahrzeugs bzw. der Energiereserveinformation lässt sich so merklich erhöhen bzw. verfeinern.

Ähnliche Betrachtungen gelten hinsichtlich weiterer, den Energieverbrauch beeinflussender Faktoren. Für den Fall eines als landwirtschaftlicher Traktor ausgebildeten Arbeitsfahrzeugs gilt dies insbesondere für die Art eines damit ausgeführten bzw. auszuführenden Arbeitsvorgangs, insbesondere eines hierzu eingesetzten Anbau- oder Zusatzgeräts, da dieses entweder einen veränderten Zugkraftbedarf bedingt oder aber seinerseits über eine Zapfwelle oder eine ISOBUS-Schnittstelle mit Energie zu versorgende Arbeitsaggregate zur Ausführung zugehöriger Anbaugerätefunktionen umfasst. Entsprechend breit ist hier die Varianz des Energieverbrauchs. Es ist daher denkbar, dass der entlang der zurückgelegten Fahrtstrecke auftretende mittlere Energieverbrauch des Arbeitsfahrzeugs von der Kontrolleinheit abhängig von einem erkannten gerätelosen Betrieb oder einem Betrieb mit einem Anbau- oder Zusatzgerät bestimmt wird. Auf das Vorhandensein eines Anbau- oder Zusatzgeräts schließt die Kontrolleinheit beispielsweise aufgrund eines signifikant erhöhten Energieverbrauchs verglichen mit einem für einen gerätelosen Betrieb vorab bestimmten Kalibrierwert.

Insoweit lässt sich eine weitere Verfeinerung erreichen, wenn bei der Bestimmung des entlang der zurückgelegten Fahrtstrecke auftretenden mittleren Energieverbrauchs des Arbeitsfahrzeugs von der Kontrolleinheit eine betriebsbedingt auftretende Änderung des Ladegewichts des Anbau- oder Zusatzgeräts berücksichtigt wird. Eine Änderung des Ladegewichts führt zu einem in charakteristischer Weise ab- bzw. zunehmendem Energieverbrauch und ist typisch für als Düngerstreuer, Ladewagen, Güllefass, Miststreuer, Sämaschine, oder dergleichen ausgebildete Anbau- oder Zusatzgeräte.

Auch äußere Bedingungen können Einfluss auf die zum Betrieb des Arbeitsfahrzeugs nutzbare Ladekapazität des elektrischen Energiespeichers nehmen, hierzu gehören insbesondere die Temperaturverhältnisse. Angesichts dessen besteht die Möglichkeit, dass der entlang der zurückgelegten Fahrtstrecke auftretende mittlere Energieverbrauch des Arbeitsfahrzeugs von der Kontrolleinheit in Abhängigkeit einer ermittelten Umgebungstemperatur bestimmt wird.

Weiterhin kann der abgeschätzte Gesamtenergiebedarf einschließlich des zugehörigen Verlaufs der Fahrtstrecke und/oder der charakteristischen Parameter von der Kontrolleinheit in einer Speichereinheit abgelegt und auf diese Weise dokumentiert werden. Durch die beim wiederholten Befahren derselben Fahrtstrecke jeweils hinzukommenden Daten lässt sich die Qualität der Abschätzung des Gesamtenergiebedarfs durch Verringerung der Varianz sukzessive verbessern. Ferner ist es möglich, dass hinsichtlich der charakteristischen Parameter bestehende Datenlücken von der Kontrolleinheit durch Approximation, beispielsweise unter Verwendung eines geeigneten KI-Verfahrens (KI- Künstliche Intelligenz), geschlossen werden.

Das erfindungsgemäße Verfahren wird im Folgenden anhand der beigefügten Zeichnungen näher erläutert. Hierbei bezeichnen übereinstimmende Bezugszeichen identische oder bezüglich ihrer Funktion vergleichbare Komponenten. Es zeigen:
- Fig. 1: ein als Flussdiagramm wiedergegebenes Ausführungsbeispiel des erfindungsgemäßen Verfahrens zur dynamischen Ladestandsüberwachung für ein elektrisch betriebenes Arbeitsfahrzeug,
- Fig. 2: eine zur Ausführung des erfindungsgemäßen Verfahrens gemäß Fig. 1 vorgesehene Vorrichtung, und
- Fig. 3: eine bildliche Darstellung eines typischen Betriebsbzw. Arbeitsablaufs eines als elektrisch betriebener landwirtschaftlicher Traktor ausgebildeten Arbeitsfahrzeugs.

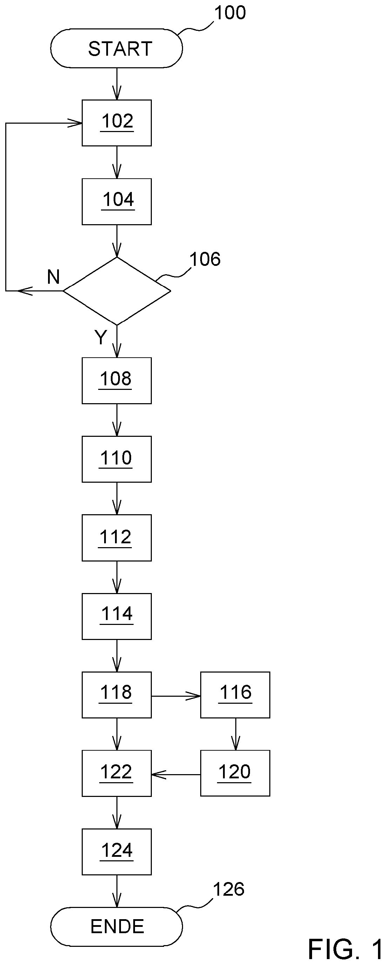

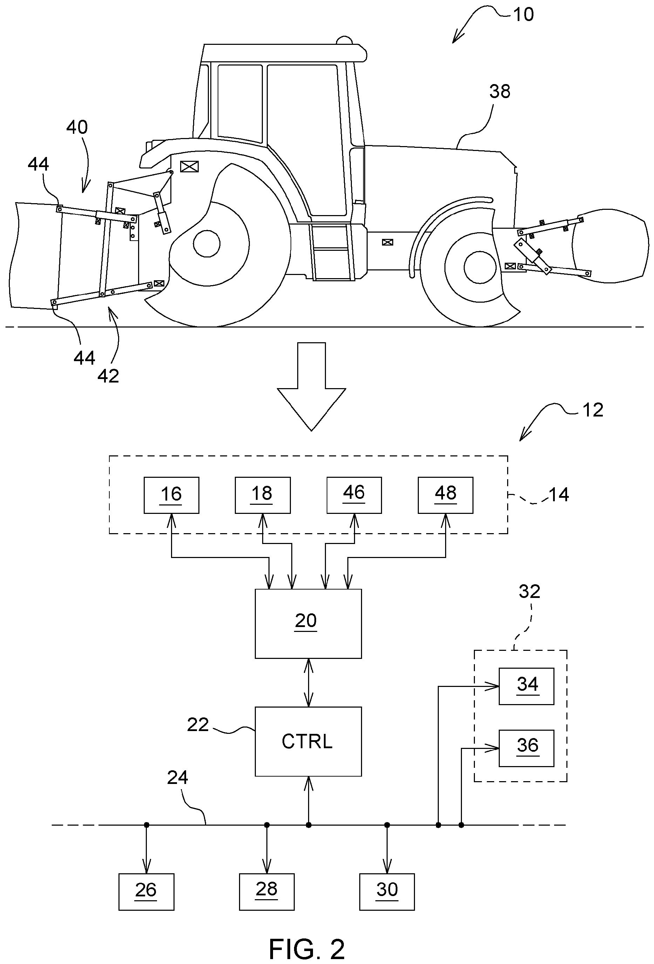

Fig. 1 zeigt ein als Flussdiagramm wiedergegebenes Ausführungsbeispiel des erfindungsgemäßen Verfahrens zur dynamischen Ladestandsüberwachung für ein elektrisch betriebenes Arbeitsfahrzeug, wobei zunächst auf die zu seiner Ausführung vorgesehene Vorrichtung entsprechend Fig. 2 eingegangen werden soll.

Die in dem Arbeitsfahrzeug 10 untergebrachte Vorrichtung 12 umfasst neben einem Antriebssystem 14, das einen an einer Ladestation aufladbaren elektrischen Energiespeicher 16 und einen elektrischen Fahrantrieb 18 aufweist, ein mit dem Antriebssystem 14 kommunizierendes Energie- und Lademanagementsystem 20, eine mikroprozessorgesteuerte Kontrolleinheit 22, in der das Verfahren als entsprechender Programmcode hinterlegt ist, sowie einen CAN-Datenbus 24, über den die Kontrolleinheit 22 mit einem GPS-Navigationssystem 26, einer Speichereinheit 28, einem Temperatursensor 30 zur Erfassung einer Umgebungstemperatur, sowie einer Nutzerschnittstelle 32 in Verbindung steht. Die Nutzerschnittstelle 32 weist ihrerseits ein Display 34 und/oder eine Sprachausgabeeinheit 36 auf. Das Antriebssystem 14 ist vorliegend derart ausgebildet, dass dieses eine Rekuperation elektrischer Energie beim Abbremsen des Arbeitsfahrzeugs 10 erlaubt.

Beispielsgemäß handelt es sich bei dem Arbeitsfahrzeug 10 um einen landwirtschaftlichen Traktor 38 mit einer Kupplungseinrichtung 40, an der sich ein landwirtschaftliches Anbau- oder Zusatzgerät anbringen lässt. Die im Heckbereich 42 des landwirtschaftlichen Traktors 38 angeordnete Kupplungseinrichtung 40 weist vorliegend die Gestalt eines Dreipunkt-Krafthebers 44 oder einer (nicht gezeigten) Kugelkopfkupplung auf, wobei eine der Kupplungseinrichtung 40 zugeordnete Zapfwelle 46 und/oder ISOBUS-Schnittstelle 48 als weitere Bestandteile des Antriebssystems 14 einer Energieversorgung zugehöriger Anbaugerätefunktionen dient. Die ISOBUS-Schnittstelle 48 umfasst hierbei einen sogenannten standardisierten AEF-Stecker, über den sich verschiedene Versorgungsspannungen (480 Volt AC oder 700 Volt DC) bereitstellen lassen.

Die Funktion der vorstehend genannten Komponenten soll nun im Kontext des in Fig. 1 wiedergegebenen Verfahrensablaufs beschrieben werden.

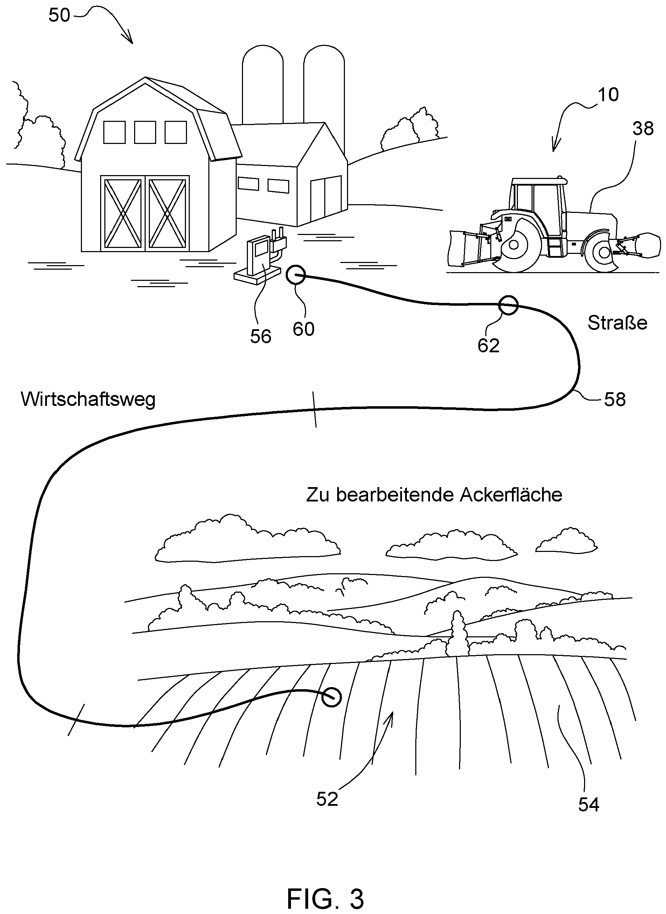

Zum besseren Verständnis sei zugleich auf Fig. 3 hingewiesen, in der eine bildliche Darstellung eines typischen Betriebs- bzw. Arbeitsablaufs des landwirtschaftlichen Traktors 38 gezeigt ist. Das in Fig. 1 wiedergegebene Verfahren macht sich dabei den für den Landwirtschaftsbereich typischen Umstand zunutze, dass der landwirtschaftliche Traktor 38 bzw. der von diesem umfasste elektrische Energiespeicher 16 in aller Regel stationär auf einem Hof 50 geladen wird, um von dort eigenständig in Richtung eines auf einer Wirtschaftsfläche 52, beispielsgemäß auf einem Acker 54 auszuführenden Arbeitsvorgangs loszufahren. Nach erfolgreichem Verrichten des betreffenden Arbeitsvorgangs kehrt der landwirtschaftliche Traktor 38 dann auf demselben Weg zum Hof 50 und damit zur dort befindlichen Ladestation 56 zurück.

Wie in Fig. 1 zu erkennen ist, wird das Verfahren in einem Startschritt 100 bei Inbetriebnahme des landwirtschaftlichen Traktors 38 initiiert und danach periodisch, typischerweise im Zeitabstand von einigen 100 ms, durchlaufen.

In einem auf den Startschritt 100 folgenden ersten Hauptschritt 102 werden von der Kontrolleinheit 22 mittels des GPS-Navigationssystems 26 zunächst die räumlichen Koordinaten des landwirtschaftlichen Traktors 38 ermittelt und in der Speichereinheit 28 als entsprechender Positionsdatensatz abgelegt. Beim periodischen Durchlaufen des Verfahrens wird so der Verlauf der gesamten vom landwirtschaftlichen Traktor 38 zurückgelegten Fahrtstrecke 58 von der Startposition 60 am Ort der Ladestation 56 bis zu dessen aktueller Betriebsposition 62 einschließlich ihres Höhenprofils aufgezeichnet.

In einem zweiten Hauptschritt 104 wird von der Kontrolleinheit 22 zusätzlich ein mit der aktuellen Betriebsposition 62 korrespondierender Fahrbahn- und/oder Untergrundtyp ermittelt und dem betreffenden Positionsdatensatz in der Speichereinheit 28 zugeordnet. Es erfolgt unter anderem eine Einteilung der zurückgelegten Fahrtstrecke 58 in Kategorien wie "Straße", "Wirtschaftsweg" "zu bearbeitende Ackerfläche" (siehe hierzu Fig. 3). Die betreffenden Zuordnungen werden aus kartografisch verorteten Metadaten des GPS-Navigationssystems 26 gewonnen.

Daraufhin wird von der Kontrolleinheit 22 in einem dritten Hauptschritt 106 überprüft, ob die im ersten Hauptschritt 102 ermittelte aktuelle Betriebsposition 62 des landwirtschaftlichen Traktors 38 innerhalb eines Umkreises von einigen 100 Metern vom angegebenen Ort der Ladestation 56, mithin der Startposition 60 liegt. Ist dies nicht der Fall, so kehrt das Verfahren zum ersten Hauptschritt 102 zurück. Andernfalls fährt die Kontrolleinheit 22 mit einem vierten Hauptschritt 108 fort, in dem ausgehend von dem von der Kontrolleinheit 22 aufgezeichneten Höhenprofil die entlang der zurückgelegten Fahrtstrecke 58 auftretenden Steigungen bzw. Gefälle bestimmt werden, wobei diese wiederum der Berechnung bzw. Bilanzierung der beim Zurückfahren zur Ladestation 56 vom landwirtschaftlichen Traktor 38 aufzubringenden bzw. rekuperierbaren (potentiellen) Energie dienen.

In einem auf den vierten Hauptschritt 108 folgenden fünften Hauptschritt 110 wird von der Kontrolleinheit 22 ein entlang der zurückgelegten Fahrtstrecke 58 auftretender mittlerer Energieverbrauch avg_E des landwirtschaftlichen Traktors 38 bestimmt. Genauer gesagt erfolgt dessen Bestimmung nach Maßgabe einer oder mehrerer für den Betrieb des landwirtschaftlichen Traktors 38 charakteristischer Parameter. Die charakteristischen Parameter repräsentieren Faktoren, die auf den Energieverbrauch des landwirtschaftlichen Traktors 38 (un-)mittelbar Einfluss haben. Die Bestimmung des mittleren Energieverbrauchs avg_E erfolgt im fünften Hautschritt 110 auf Grundlage eines in der Speichereinheit 28 hinterlegten Energieverbrauchsmodells, das nach Maßgabe der einbezogenen charakteristischen Parameter ausgewählt bzw. angepasst wird.

Der Umfang des Energieverbrauchs ergibt sich in erster Linie aus dem Betrieb des elektrischen Fahrantriebs 18 abhängig vom Fahrverhalten des Fahrers bzw. der von diesem vorgegebenen Fahrgeschwindigkeit, aber auch aufgrund weiterer Faktoren, die den Betrieb peripherer Verbraucher betreffen, wie beispielsweise von über die Zapfwelle 46 oder die ISOBUS-Schnittstelle 48 mit Energie zu versorgender Arbeitsaggregate zur Ausführung zugehöriger Anbaugerätefunktionen und/oder diverser hydraulischer bzw. elektrischer Nebenaggregate des landwirtschaftlichen Traktors 38. Die betreffenden Informationen werden von der Kontrolleinheit 22 im fünften Hauptschritt 110 durch Auslesen des Energie- und Lademanagementsystems 20 sowie gegebenenfalls von über die ISOBUS-Schnittstelle 48 bzw. den CAN-Datenbus 26 übertragenen Betriebsinformationen ermittelt und mit der im ersten Hauptschritt 102 erfassten aktuellen Betriebsposition 62 des landwirtschaftlichen Traktors 38 verortet. Ergänzt werden diese durch charakteristische Parameter in Form des im zweiten Hauptschritt 104 für die aktuelle Betriebsposition 62 des landwirtschaftlichen Traktors 38 ermittelten Fahrbahn- und/oder Untergrundtyps, der im vierten Hauptschritt 108 berechneten steigungs- bzw. gefällebedingt aufzubringenden bzw. rekuperierbaren Energie, sowie einer mittels des Temperatursensors 30 erfassten Umgebungstemperatur.

Hinzu kommen Faktoren, die den Zugkraftbedarf eines an dem landwirtschaftlichen Traktor 38 gegebenenfalls angebrachten Anbau- oder Zusatzgeräts sowie den sich daraus ergebenden Einfluss auf den Energieverbrauch betreffen.

Hierbei schließt die Kontrolleinheit 22 in einem sechsten Hauptschritt 112 auf das Vorhandensein eines an der Kupplungseinrichtung 40 angebrachten Anbau- oder Zusatzgeräts, wenn sich durch Auslesen des Energie- und Lademanagementsystems 20 ergibt, dass verglichen mit einem für einen gerätelosen Betrieb vorab bestimmten Kalibrierwert ein signifikant erhöhter Energieverbrauch vorliegt.

Ist dies der Fall, so wird von der Kontrolleinheit 22 ferner in einem siebten Hauptschritt 114 überprüft, ob sich betriebsbedingt das Ladegewicht des Anbau- oder Zusatzgeräts ändert. Eine Änderung des Ladegewichts führt zu einem in charakteristischer Weise ab- bzw. zunehmendem Energieverbrauch und ist typisch für als Düngerstreuer, Ladewagen, Güllefass, Miststreuer, Sämaschine, oder dergleichen ausgebildete Anbau- oder Zusatzgeräte.

Handelt es sich um ein über die ISOBUS-kompatibles Anbau- oder Zusatzgerät, so lässt sich dieses anhand einer über die ISOBUS-Schnittstelle 48 übertragenen Gerätekennung identifizieren. Die im sechsten und siebten Hauptschritt 112, 114 durchgeführte Analyse des Energieverbrauchs erübrigt sich in einem solchen Fall.

Der solchermaßen bestimmte mittlere Energieverbrauch avg_E dient anschließend der Abschätzung eines zur Rückkehr aus der aktuellen Betriebsposition 62 zur Startposition 60 entlang der zurückgelegten Fahrtstrecke 58 vorzuhaltenden Gesamtenergiebedarfs sum_E des landwirtschaftlichen Traktors 38. Bei der Abschätzung des Gesamtenergiebedarfs sum_E bleiben solche Anteile des mittleren Energieverbrauchs avg_E durch gezieltes Ausfiltern seitens der Kontrolleinheit 22 unberücksichtigt, die beim Zurückfahren zum Hof 50 keine Rolle spielen, insbesondere weil diese hier typischerweise nicht anfallen. Bei einem als Güllefass ausgebildeten Anbaugerät betrifft dies zum Beispiel den Betrieb einer Umwälzpumpe. Diese wird nach vollständiger Ausbringung der Gülle stillgelegt, verbraucht auf der Rückfahrt somit keine Energie. Die auszufilternden Verbrauchsanteile werden im Rahmen eines für das betreffende Anbau- oder Zusatzgerät in der Speichereinheit 28 hinterlegten und zur Bestimmung des mittleren Energieverbrauchs avg_E im fünften Hauptschritt 110 herangezogenen Energieverbrauchsmodells identifiziert und von der Kontrolleinheit 22 entsprechend berücksichtigt.

Genauer gesagt erfolgt die Abschätzung des vorzuhaltenden Gesamtenergiebedarfs sum_E in einem ersten Nebenschritt 116 unter dem in einem achten Hauptschritt 118 überprüften Vorbehalt, dass die bis zur aktuellen Betriebsposition 62 zurückgelegte Fahrtstrecke 58 nicht bereits zuvor durchfahren bzw. aufgezeichnet wurde und/oder die insofern durch die charakteristischen Parameter gegebenen Betriebsbedingungen nicht miteinander vergleichbar sind. Der in einem solchen Fall im ersten Nebenschritt 118 abgeschätzte Gesamtenergiebedarf sum_E wird in einem zweiten Nebenschritt 120 einschließlich des zugehörigen Verlaufs der Fahrtstrecke 58 und/oder der charakteristischen Parameter in der Speichereinheit 28 abgelegt und auf diese Weise dokumentiert. Hierbei werden hinsichtlich der charakteristischen Parameter bestehende Datenlücken von der Kontrolleinheit 22 durch Approximation, beispielsweise unter Verwendung eines geeigneten KI-Verfahrens (KI- Künstliche Intelligenz), geschlossen.

Ergibt sich hingegen, dass der Verlauf der bis zur aktuellen Betriebsposition 62 zurückgelegten Fahrtstrecke 58 bereits in der Vergangenheit durchfahren bzw. aufgezeichnet wurde und die insofern durch die charakteristischen Parameter gegebenen Betriebsbedingungen miteinander vergleichbar sind, so wird von der Kontrolleinheit 22 unmittelbar auf den insoweit in der Speichereinheit 28 abgelegten Gesamtenergiebedarf sum_E zurückgegriffen. Eine erneute Abschätzung unterbleibt in diesem Fall.

Der abgeschätzte Gesamtenergiebedarf sum_E des landwirtschaftlichen Traktors 38 wird schließlich auf Veranlassung der Kontrolleinheit 22 in einem neunten Hauptschritt 122 als Energiereserveinformation über die Nutzerschnittstelle 32 ausgegeben. Hierzu wird diese durch Ansteuerung des Displays 34 und/oder der Sprachausgabeeinheit 36 für den Fahrer visuell und/oder auditiv wahrnehmbar gemacht.

Ein zehnter Hauptschritt 124 sieht zusätzlich die Ausgabe der Energiereserveinformation als verbleibende Restarbeitszeit vor, wobei letztere von der Kontrolleinheit 22 auf Grundlage eines Vergleichs des abgeschätzten vorzuhaltenden Gesamtenergiebedarfs sum_E mit dem aktuellen Energieverbrauch des landwirtschaftlichen Traktors 38 sowie dem aktuellen Ladestand des elektrischen Energiespeichers 16 über die Nutzerschnittstelle 32 berechnet wird. Informationen hinsichtlich des aktuellen Energieverbrauchs wie auch des aktuellen Ladestands des elektrischen Energiespeichers 16 stehen der Kontrolleinheit 22 seitens des Energie- und Lademanagementsystems 20 zur Verfügung.

In einem Schlussschritt 126 wird das Verfahren beim Abstellen des landwirtschaftlichen Traktors 38 beendet.

Es sei angemerkt, dass das erfindungsgemäße Verfahren nicht auf einen bestimmten Typ von Arbeitsfahrzeug 10 beschränkt ist, auch kann es sich anstelle eines auf einer Wirtschaftsfläche 52 auszuführenden Arbeitsvorgangs ebenso gut um eine Transportfahrt mit einem Anhänger handeln, die zwischen dem Hof 50 und einer bestimmten Verladestelle ausgeführt wird.

Auch ist es abweichend von der Darstellung in Fig. 3 möglich, dass der landwirtschaftliche Traktor 38 mehrere Wirtschaftsflächen hintereinander aufsucht und erst danach auf einem vom Hinweg abweichenden Rückweg zum Hof 50 zurückfährt. Der aufgezeichnete Verlauf der zurückgelegten Fahrtstrecke 58 wird in einem solchen Fall als Grundlage für eine wahrscheinlichkeitsbasierte Ableitung der Rückfahrtstrecke herangezogen, wozu insbesondere kartografische Informationen hinsichtlich eines umliegenden Straßen- und Wegenetzes von der Kontrolleinheit 22 ausgewertet werden. Die betreffenden kartografischen Informationen werden mittels des GPS-Navigationssystems 26 in Verbindung mit einer topografischen Datenbank zur Verfügung gestellt. Hierbei wird von der Kontrolleinheit 22 der entlang der zurückgelegten Fahrtstrecke 58 bestimmte mittlere Energieverbrauch avg_E zur Vorhersage eines für die Rückfahrtstrecke zu erwartenden mittleren Energieverbrauchs avg_E' herangezogen. Letzterer dient dann im ersten Nebenschritt 118 der Abschätzung des vorzuhaltenden Gesamtenergiebedarfs sum_E.

## Patentansprüche

1. Verfahren zur dynamischen Ladestandsüberwachung für ein elektrisch betriebenes Arbeitsfahrzeug, das ein Antriebssystem (14) mit einem an einer Ladestation (56) aufladbaren elektrischen Energiespeicher (16) umfasst, bei dem von einer Kontrolleinheit (22)
der Verlauf einer zwischen einer Startposition (60) des Arbeitsfahrzeugs (10) am Ort der Ladestation (56) und einer davon abweichenden aktuellen Betriebsposition (62) des Arbeitsfahrzeugs (10) zurückgelegten Fahrtstrecke (58) einschließlich ihres Höhenprofils aufgezeichnet wird,
ein entlang der zurückgelegten Fahrtstrecke (58) auftretender mittlerer Energieverbrauch des Arbeitsfahrzeugs (10) bestimmt wird,
auf Grundlage des aufgezeichneten Verlaufs der Fahrtstrecke (58) sowie des bestimmten mittleren Energieverbrauchs ein zur Rückkehr aus der aktuellen Betriebsposition (62) zur Startposition (60) entlang der zurückgelegten Fahrtstrecke (58) oder einer daraus abgeleiteten Rückfahrtstrecke vorzuhaltender Gesamtenergiebedarf des Arbeitsfahrzeugs (10) abgeschätzt wird, und
der abgeschätzte vorzuhaltende Gesamtenergiebedarf des Arbeitsfahrzeugs (10) als Energiereserveinformation über eine Nutzerschnittstelle (32) ausgegeben wird.

2. Verfahren nach Anspruch 1, **dadurch gekennzeichnet, dass** die Energiereserveinformation von der Kontrolleinheit (22) auf Grundlage eines Vergleichs des abgeschätzten vorzuhaltenden Gesamtenergiebedarfs mit einem aktuellen Energieverbrauch des Arbeitsfahrzeugs (10) sowie dem aktuellen Ladestand des elektrischen Energiespeichers (16) über die Nutzerschnittstelle (32) als verbleibende Restarbeitszeit ausgegeben wird.

3. Verfahren nach Anspruch 1 oder 2, **dadurch gekennzeichnet, dass** der entlang der zurückgelegten Fahrtstrecke (58) auftretende mittlere Energieverbrauch von der Kontrolleinheit (22) nach Maßgabe einer oder mehrerer für den Betrieb des Arbeitsfahrzeugs (10) charakteristischer Parameter bestimmt wird.

4. Verfahren nach Anspruch 3, **dadurch gekennzeichnet, dass** die charakteristischen Parameter einen von der Kontrolleinheit (22) ermittelten Fahrbahn- und/oder Untergrundtyp betreffen.

5. Verfahren nach Anspruch 3 oder 4, **dadurch gekennzeichnet, dass** die charakteristischen Parameter die Art eines mit dem Arbeitsfahrzeug (10) ausgeführten bzw. auszuführenden Arbeitsvorgangs, insbesondere eines hierzu eingesetzten Anbau- oder Zusatzgeräts betreffen.

6. Verfahren nach Anspruch 5, **dadurch gekennzeichnet, dass** sich die charakteristischen Parameter auf einen erkannten gerätelosen Betrieb oder einen Betrieb mit einem Anbau- oder Zusatzgerät, insbesondere eine Änderung des Ladegewichts des Anbau- oder Zusatzgeräts, beziehen.

7. Verfahren nach wenigstens einem der Ansprüche 3 bis 6,
**dadurch gekennzeichnet, dass** die charakteristischen Parameter eine ermittelte Umgebungstemperatur betreffen.

8. Verfahren nach wenigstens einem der Ansprüche 3 bis 7,
**dadurch gekennzeichnet, dass** die charakteristischen Parameter eine steigungs- bzw. gefällebedingt aufzubringende bzw. rekuperierbare Energie betreffen.

9. Verfahren nach wenigstens einem der Ansprüche 3 bis 8,
**dadurch gekennzeichnet, dass** der abgeschätzte Gesamtenergiebedarf einschließlich des zugehörigen Verlaufs der Fahrtstrecke (58) und/oder der charakteristischen Parameter von der Kontrolleinheit (22) in einer Speichereinheit 28) abgelegt wird.

10. Verfahren nach Anspruch 9, **dadurch gekennzeichnet, dass** hinsichtlich der charakteristischen Parameter bestehende Datenlücken von der Kontrolleinheit (22) durch Approximation, beispielsweise unter Verwendung eines KI-Verfahrens, geschlossen werden.
